**Europäisches Patentamt**

**European Patent Office**

**Office européen des brevets**

(19)

(11) Publication number : **0 354 733 B1**

## (12) EUROPEAN PATENT SPECIFICATION

(45) Date of publication of patent specification :
23.09.92 Bulletin 92/39

(51) Int. Cl.⁵ : **G01M 3/18**

(21) Application number : **89307935.0**

(22) Date of filing : **03.08.89**

(54) Conductive resin structure for connecting metal conductors.

(30) Priority : **11.08.88 JP 105378/88**

(43) Date of publication of application :
**14.02.90 Bulletin 90/07**

(45) Publication of the grant of the patent :
**23.09.92 Bulletin 92/39**

(84) Designated Contracting States :
**AT BE CH DE ES FR GB GR IT LI LU NL SE**

(56) References cited :
**EP-A- 0 253 085**
**DE-A- 3 422 394**

(73) Proprietor : **JUNKOSHA CO. LTD.**
**25-25, Miyasaka 2-chome**
**Setagaya-ku Tokyo 156 (JP)**

(72) Inventor : **Akiba, Juji**
**1-27-202, 494 Shimo-Kayama**
**Iruma-gun Saitama (JP)**

(74) Representative : **Klunker . Schmitt-Nilson .**
**Hirsch**
**Winzererstrasse 106**
**W-8000 München 40 (DE)**

## Description

The invention relates to the connection of metal electrical conductors by means of a conductive resin, and to oil leakage detection sensors and apparatus incorporating such a connection.

Electrically conductive resins have been developed in recent years and, depending on the application involved and the location of use, are being used increasingly to make electrical connections between metal conductors. For example, it is known to use connecting structures of this type in the detecting parts of oil leakage detection sensors designed to check for oil leakage from oil tanks, piping in chemical plants, or aqueous or organic fluid carrying pipelines.

One example of a conductive resin which may be used in the sensing part of an oil leakage detection sensor is carbon-filled polytetrafluoroethylene (PTFE), which is endowed with electrical conductivity by the admixture of powdered carbon in a PTFE insulation material. PTFE resins have the p

roperty of repelling water while allowing the permeation of oil. In addition, carbon-filled PTFE resins have the property of exhibiting a change in electrical resistance when permeated by oil, and it is this property which is utilised by the sensor in detecting oil leakage.

A form of oil leakage detecting sensor of this type is disclosed in DE-A1-3 422 394 and comprises a pair of conductive metal lead wires which are mounted so that they are separated from each other. In the detecting part of the sensor, these lead wires are electrically connected to each other by a resistor which consists of an electrically conductive resin, such as carbon-filled PTFE. This resistor is usually in the form of a connecting band extending between the wires. The respective ends of the resistor are bonded to the circumferential surfaces of the lead wires by means of a conductive adhesive, with each end covering approximately half of the circumferential surface of the corresponding lead wire. Furthermore, these lead wires and the resistor are covered by an insulating substrate, which may comprise a PTFE resin.

The respective lead wires of the oil leakage detecting sensor are connected to a detection circuit, so that a closed circuit is formed by the lead wires, the resistor, and the detection circuit. When oil contacts the detecting part of the sensor, the oil permeates through the insulating substrate and penetrates into the resistor. As a result, the electrical resistance of the resistor changes, so that an accompanying electrical change occurs in the detection circuit, whereby the leakage of oil can be detected.

In the above conventional structure, different materials, such as the lead wires, which are made of metal, and the resistor, which is made of a resin material, are bonded directly to each other by means of an adhesive. Accordingly, the bonding strength is weak, which can lead to improper or inconsistent contact, and in some cases to an interruption of electrical continuity owing to peeling of the bonded area. As a result, such conventional structures have lacked reliability.

Further, since the resistor is in contact with only about half of the circumferential surface of each of the lead wires, the area of contact is small, so that there is a large increase in electrical resistance in the connecting part. In the case of an oil leakage detecting sensor as described, this results in reduced sensitivity.

In view of the problems encountered with the above described electrical connecting structure, according to the invention there is provided a connecting structure in which at least two metal electrical conductors are connected comprising:

(a) a covering layer of electrically conductive resin surrounding each metal conductor over at least a portion of its length;

(b) a band of electrically conductive resin interconnecting the covering layers of said metal conductors, the band at least partially wrapping around and attaching to the covering layer of each conductor; and

(c) a hydrocarbon-penetrable jacket surrounding said covered metal conductors and said conductive resin band.

Since the entire circumference of the connection area of each metal conductor is covered by its resin covering layer, the joint between each metal conductor and the corresponding covering layer is secure despite the fact that the materials involved are different. Furthermore, the contact area is also large. Accordingly, a good electrical connection is obtained. In addition, since both the covering layers and the connecting band are made of a resin material, sufficient mechanical strength can be obtained in the joining of the covering layers and the connecting band. As a result, a connecting structure is obtained which is favourable both in terms of electrical characteristics and in terms of mechanical strength.

According to a further aspect of the invention, there is provided an oil-leakage detection apparatus comprising:

(a) means for detecting a change in the electrical resistance of an electrical circuit;

(b) an electrical circuit connected to said resistance-change detecting means; and

(c) an oil detecting sensor including electrically-conductive resin covered metal electrical conductors connected to the electrical circuit, a porous, electrically conductive resin band connecting said covered metal conductors, and an oil-penetrable jacket surrounding said covered metal conductors and said band.

An embodiment of the connecting structure in accordance with the invention will now be described, by way of example, in the context of an oil-leakage detecting sensor and with reference to the accompanying drawings in which:-

Figure I is a perspective view of the oil-leakage detecting sensor; and

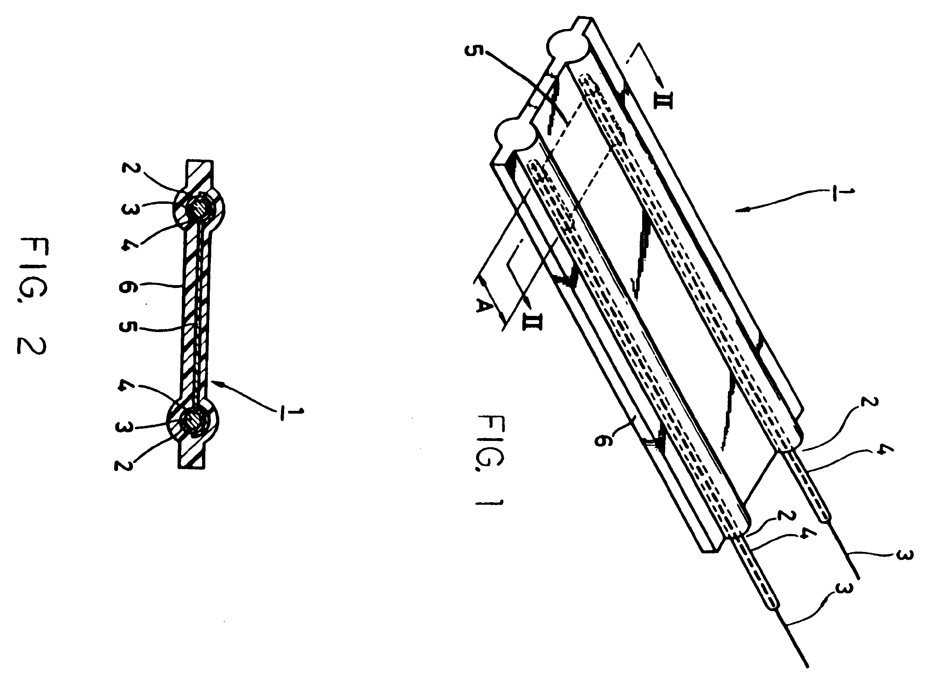

Figure 2 is a cross-section of the oil-leakage detecting sensor along line II-II of Figure I.

The oil leakage detecting sensor I shown in the drawings has a pair of conductive carbon-filled PTFE resin-covered conductors 2 which are arranged so that they are separated from each other. Each conductor 2 comprises a metal lead wire 3 and a covering 4 which comprises a conductive carbon-filled PTFE resin and which surrounds the entire circumference of the lead wire 3 in a tightly adhering state. Accordingly, the connection between the lead wire 3 and the covering 4 in each conductor 2 is extremely strong mechanically. Also, since the area of contact is large, this connection is also favourable from an electrical standpoint. The method used to cover each lead wire 3 with its covering 4 may be the same as the method used generally to manufacture PTFE resin-covered or coated wires, and a description of the method is therefore omitted here.

The tip portion of each of the conductors 2 forms a connection area A in which the coverings 4 of the two conductors are electrically connected to each other via a band-shaped resistor or connecting piece 5 which is formed from conductive carbon-filled PTFE resin. Each of the ends of the band-shaped resistor 5 is joined by thermal fusion to approximately half of the circumferential surface of the covering 4 of a respective one of the conductors 2. As is known, joints formed by thermal fusion are excellent in terms of mechanical strength. Such a connection method is also extremely favourable from an electrical standpoint.

Although conductive carbon-filled PTFE resin-covered wires are used in this example as described above, it would also be possible to provide the covering layer 4 only in the connection area A of each lead wire 3.

The conductors 2 and resistor 5 are covered by an insulating substrate 6 formed of porous PTFE resin, so that one end of each conductor is embedded in the insulating substrate 6, while the other end of the conductor 2 projects from the insulating substrate 6. The projecting portions of the conductors 2 serve as terminals for connection to a detection circuit (not shown), for which purpose the covering layers 4 are stripped away at the tips of the projecting portions of the conductors 2 to expose the lead wires 3 as shown in Figure I for connection to the detection circuit. After the lead wires 3 have been connected to the detection circuit, the conductors 2 and naked lead wires 3 projecting from the insulating substrate 6 may be covered by insulation moulded from an appropriate insulating material.

In the oil leakage detecting sensor I as described above, the joints between the lead wires 3 and the covering layers 4 and the joints between the covering layers 4 and the resistor band 5 are extremely strong mechanically. Accordingly, the joint areas tend not to be damaged even if the sensor I is subjected to vibration or external forces. Further, these joints are also extremely favourable in terms of electrical characteristics. Accordingly, there are no problems of improper contact or interruption of electrical continuity as in the case of sensors employing a conventional connection structure. The electrical resistance of the connecting structure can also be made smaller than is possible in the case of a conventional device, so that the sensitivity of the oil leakage detecting sensor I is also improved.

The operating principle of the oil leakage detecting sensor of this example is the same as that of a conventional oil leakage detecting sensor, in that the electrical resistance of the resistor 5 and the covering layers 4 in the connection areas A changes when the sensor is permeated by oil, and this change in electrical resistance is detected by the detection circuit.

It will of course be appreciated that the invention is not limited to the specific example described above, and that various other configurations may be used. For example, there is only one pair of lead wires 3 in the oil leakage detecting sensor described above, whereas it would be possible, if desired, to install two pairs of lead wires 3 or an even larger number of lead wires 3. The conductive resins which may be used in the present invention are not limited to conductive carbon-filled PTFE resins. Conductive metal powder could be used as the filler, and porous polyethylene, porous polypropylene, and porous rubber are examples of other resins which may be used. Also, the connecting structure described may be used in other devices besides oil leakage detecting sensors.

## Claims

1. A connecting structure in which at least two metal electrical conductors (3) are connected comprising:

   (a) a covering layer (4) of electrically conductive resin surrounding each metal conductor (3) over at least a portion of its length;
   (b) a band (5) of electrically conductive resin interconnecting the covering layers (4) of said metal conductors, the band at least partially wrapping around and attaching to the covering layer of each conductor; and
   (c) a hydrocarbon-penetrable jacket (6) surrounding said covered metal conductors and said conductive resin band (5).

2. A structure according to claim I, wherein said con-

ductive resin covering layer (4) of each metal conductor (3) comprises carbon-filled porous expanded polytetrafluoroethylene.

3. A structure according to claim I or claim 2, wherein said conductive resin band (5) comprises carbonfilled porous expanded polytetrafluoroethylene.

4. A structure according to any one of claims I to 3, wherein said jacket (6) comprises a porous hydrocarbon resin.

5. A structure according to claim 4, wherein said porous hydrocarbon resin is porous expanded polytetrafluoroethylene, porous polypropylene, porous polyethylene or porous rubber.

6. An oil-leakage detection apparatus comprising:
(a) means for detecting a change in the electrical resistance of an electrical circuit;
(b) an electrical circuit connected to said resistance-change detecting means; and
(c) an oil detecting sensor (I) including electrically-conductive resin covered metal electrical conductors (2) connected to the electrical circuit, a porous, electrically conductive resin band (5) connecting said covered metal conductors, and an oil-penetrable jacket (6) surrounding said covered metal conductors (2) and said band (5).

7. An apparatus according to claim 6, wherein the electrically conductive resin covering (4) of said covered metal conductors (2) and the band (5) connecting said covered metal conductors comprise conductive carbon-filled porous expanded polytetrafluoroethylene.

8. An apparatus according to claim 6 or claim 7, wherein the oil-penetrable jacket (6) comprises porous expanded polytetrafluoroethylene.

9. An oil leakage detecting sensor comprising at least two metal electrical conductors (3) each having a covering layer (4) of electrically conductive resin surrounding it over at least a portion of its length, a band (5) of porous, electrically conductive resin inter-connecting the covering layers (4) of said metal conductors (3), the band at least partially wrapping around and attaching to the covering layer of each conductor; and a hydrocarbonpenetrable jacket (6) surrounding said covered metal conductors and said conductive resin band.

**Patentansprüche**

1. Verbindungsstruktur, in der mindestens zwei metallische elektrische Leiter verbunden sind, umfassend:
a) eine Deckschicht (4) aus elektrisch leitfähigem Kunstharz, welches jeden metallischen Leiter (3) über zumindest einem Längenabschnitt umgibt;
b) ein Band (5) aus elektrisch leitendem Kunstharz, welches die Deckschichten (4) der metallischen Leiter abdeckt, wobei das Band zumindest teilweise um die Deckschicht (4) jedes Leiters herumgewickelt und an der Schicht befestigt ist und
c) einen kohlenwasserstoff-durchdringlichen Mantel (6), der die bedeckten metallischen Leiter (3) und das Band aus leitendem Kunstharz umgibt.

2. Struktur nach Anspruch 1, bei der die aus leitendem Kunstharz bestehende Deckschicht (4) jedes metallischen Leiters (3) mit Kohlenstoff gefülltes, poröses, expandiertes Polytetrafluoräthylen aufweist.

3. Struktur nach Anspruch 1 oder 2, bei dem das leitende Kunstharzband (5) mit Kohlenstoff gefülltes, poröses, expandiertes Polytetrafluoräthylen aufweist.

4. Struktur nach einem der Ansprüche 1 bis 3, bei der der Mantel (6) ein poröses Kohlenwasserstoffharz aufweist.

5. Struktur nach Anspruch 4, bei der das poröse Kohlenwasserstoffharz poröses, expandiertes Polytetrafluoräthylen, poröses Polypropylen, poröses Polyäthylen oder poröser Gummi ist.

6. Ölleckage-Detektorvorrichtung, umfassend:
a) eine Einrichtung zum Erfassen einer Anderung des elektrischen Widerstands eines elektrischen Kreises;
b) einen elektrischen Kreis, der an die eine Widerstandsänderung erfassende Detektoreinrichtung angeschlossen ist; und
c) einen Öldetektorsensor (1) mit durch elektrisch leitendes Kunstharz abgedeckten metallischen elektrischen Leitern (2), die an den elektrischen Kreis angeschlossen sind, einem porösen, elektrisch leitenden Harzband (5), welches die abgedeckten metallischen Leiter verbindet, und einem öldurchlässigen Mantel (6), der die abgedeckten metallischen Leiter (2) und das Band (5) umgibt.

7. Vorrichtung nach Anspruch 6, bei der die elektrisch leitende Kunstharzabdeckung (4) der abgedeckten metallischen Leiter (2) und das Band (5), das die abgedeckten metallischen Leiter verbindet, leitendes, kohlenstoffgefülltes, poröses und expandiertes Polytetrafluoräthylen aufweisen.

8. Vorrichtung nach Anspruch 6 oder 7, bei dem der öldurchlässige Mantel (6) poröses, expandiertes Polytetrafluoräthylen aufweist.

9. Ölleckage-Detektorvorrichtung, umfassend mindestens zwei metallische elektrische Leiter (3), die jeweils eine Deckschicht (4) aus elektrisch leitendem Kunstharz aufweisen, welches den Leiter über mindestens einem Längenabschnitt umgibt, ein Band (5) aus porösem, elektrisch leitendem Kunstharz, welches die Deckschichten (4) der metallischen Leiter (3) verbindet, wobei das Band mindestens teilweise die Deckschicht jedes Leiters umschlingt und an ihr befestigt ist; und einen kohlenwasserstoff-durchlässigen Mantel (6), der die abgedeckten metallischen Leiter und das leitende Kunstharzband umgibt.

**Revendications**

1. Structure de connexion dans laquelle deux conducteurs électriques métalliques au moins (3) sont connectés, comprenant :
   (a) une couche de revêtement (4) d'une résine conductrice de l'électricité, entourant chaque conducteur métallique (3) sur une partie au moins de sa longueur,
   (b) une bande (5) d'une résine conductrice de l'électricité, interconnectant les couches (4) de revêtement des conducteurs métalliques, la bande s'enroulant au moins partiellement autour de la couche de revêtement (4) de chaque conducteur et étant fixée à cette couche, et
   (c) une gaine (6) dans laquelle peuvent pénétrer des hydrocarbures et entourant les conducteurs métalliques revêtus (3) et la bande (5) d'une résine conductrice.

2. Structure selon la revendication 1, dans laquelle la couche (4) de revêtement de résine conductrice de chaque conducteur métallique (3) contient du polytétrafluoréthylène expansé poreux et chargé de carbone.

3. Structure selon la revendication 1 ou 2, dans laquelle la bande de résine conductrice (5) contient du polytétrafluoréthylène expansé poreux chargé de carbone.

4. Structure selon l'une quelconque des revendications 1 à 3, dans laquelle la gaine (6) est formée d'une résine hydrocarbonée poreuse.

5. Structure selon la revendication 4, dans laquelle la résine hydrocarbonée poreuse est du polytétrafluoréthylène expansé poreux, du polypropylène poreux, du polyéthylène poreux ou du caoutchouc poreux.

6. Appareil de détection de fuites d'huile, comprenant :
   (a) un dispositif de détection d'une variation de la résistance électrique d'un circuit électrique,
   (b) un circuit électrique connecté au dispositif de détection d'une variation de résistance, et
   (c) un capteur (1) de détection d'huile comprenant des conducteurs électriques métalliques (2) revêtus d'une résine conductrice de l'électricité et connectés au circuit électrique, une bande (5) d'une résine poreuse et conductrice de l'électricité, connectant les conducteurs métalliques revêtus, et une gaine (6) qui peut être traversée par une huile et qui entoure les conducteurs métalliques revêtus (2) et la bande (5).

7. Appareil selon la revendication 6, dans lequel le revêtement (4) d'une résine conductrice de l'électricité des conducteurs métalliques revêtus (2) et la bande (5) connectant les conducteurs métalliques revêtus contiennent du polytétrafluoréthylène conducteur expansé poreux chargé de carbone.

8. Appareil selon la revendication 6 ou 7, dans lequel la gaine (6) dans laquelle peut pénétrer une huile contient du polytétrafluoréthylène expansé poreux.

9. Capteur de détection de fuites d'huile, comprenant au moins deux conducteurs électriques métalliques (3) ayant chacun une couche de revêtement (4) d'une résine conductrice de l'électricité qui l'entoure sur une partie au moins de sa longueur, une bande (5) d'une résine poreuse et conductrice de l'électricité, interconnectant les couches (4) de revêtement des conducteurs métalliques (3), la bande entourant au moins partiellement la couche de revêtement de chaque conducteur et étant fixée à cette couche, et une gaine (6) dans laquelle peuvent pénétrer les hydrocarbures et entourant les conducteurs métalliques revêtus et la bande d'une résine conductrice.

FIG. 1

FIG. 2